# EUROPEAN PATENT SPECIFICATION

(11) **EP 1 482 785 B1**
(45) Date of publication and mention of the grant of the patent: **22.06.2005**
(21) Application number: 03705617.3
(22) Date of filing: 21.02.2003
(51) Int. Cl.: A01K 61/00

(54) **METHOD FOR AUTOMATIC INJECTION OF A SUBSTANCE INTO LIVING FISHES AND A DEVICE FOR SUCH INJECTION**
VERFAHREN FÜR DIE AUTOMATISCHE INJEKTION EINER SUBSTANZ IN LEBENDE FISCHE UND VORRICHTUNG FÜR DIESE INJEKTION
PROCEDE D'INJECTION AUTOMATIQUE D'UNE SUBSTANCE DANS DES POISSONS VIVANTS ET DISPOSITIF PREVU A CET EFFET

(30) Priority: 22.02.2002 SE 0200517
(43) Date of publication of application: 08.12.2004
(73) Proprietor: Nordich Fish Tech AB, 426 74 Västra Frölunda (SE)
(72) Inventor: LEANDER, Leif, S-436 45 Askim (SE); LEANDER, Olof, S-412 63 Göteborg (SE)
(74) Representative: Mossmark, Anders
(86) International application number: PCT/SE2003/000283
(87) International publication number: WO 2003/069987

(56) References cited:
- WO-A1-89/04601
- WO-A1-90/11692
- JP-A- 62 087 042
- US-A- 5 839 952

## Description

### TECHNICAL FIELD

The present invention relates to a method for automatic injection of compounds into living fish according to the preamble of the appended claim 1.

The present invention relates to a device for automatic injection of compounds according to the preamble of the appended claim 1.

### BACKGROUND ART

From the patent document US 5,103,767 a method and a machine for vaccination of fish is previously known. In this method, the fish are transported in their longitudinal direction with their heads first past a vaccination station for injection of a vaccine. At the vaccination station, there are a number of vaccination units at a stationary position resulting in that injection is acquired at an approximate area that may vary according to the length of the fish. In order to acquire a fairly correct vaccination, the fish may be roughly sorted into different size categories in combination with a presetting of the injection units to a fixed position for each size category. Such a sorting work is very laborious and is partly carried out by means of machines and partly manually, and has to be carried out with great caution, since living fish is handled. The previously known machine requires several parallel lines and stations, in the example shown eight lines, which, to sum up, implies a detailed and costly procedure.

### DISCLOSURE OF INVENTION

The purpose of the present invention is to present a method and a device, which enable injection at an individually correct place for each fish without a preceding sorting procedure.

Said purpose is achieved by means of the method for automatic injection according to the present invention, which characterizing features are disclosed in the appended claim 1.

Said purpose is also achieved by means of the device for automatic injection according to the invention, which characterizing features are disclosed in the appended claims.

### BRIEF DESCRIPTION OF DRAWINGS

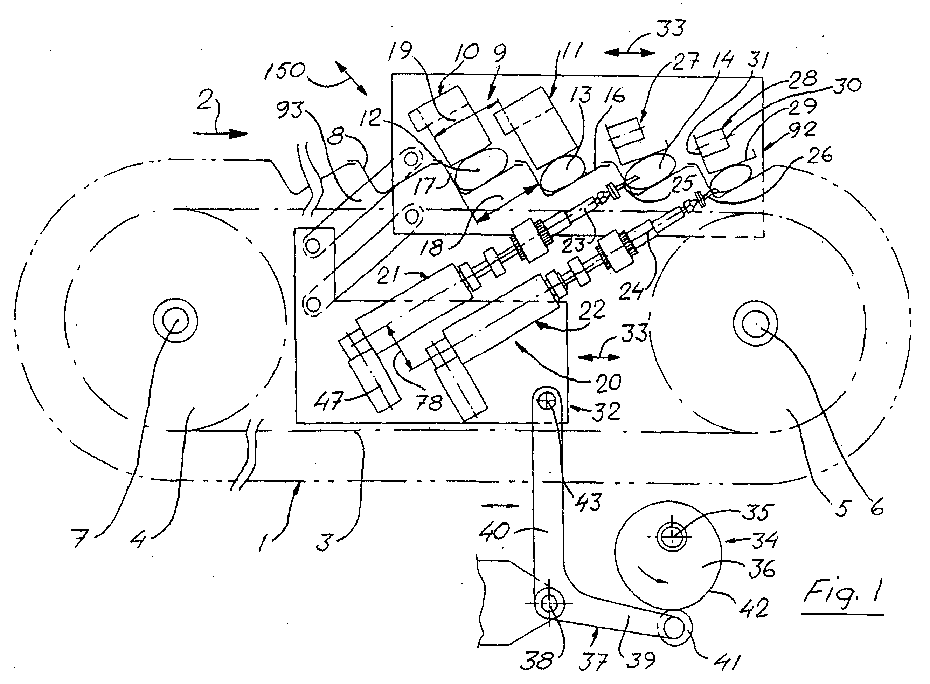

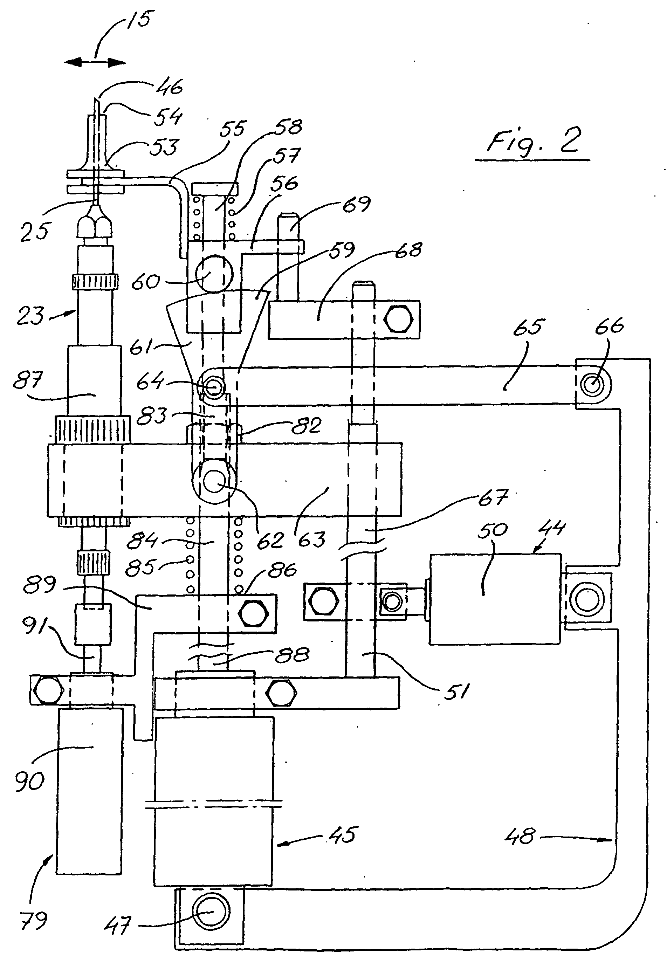

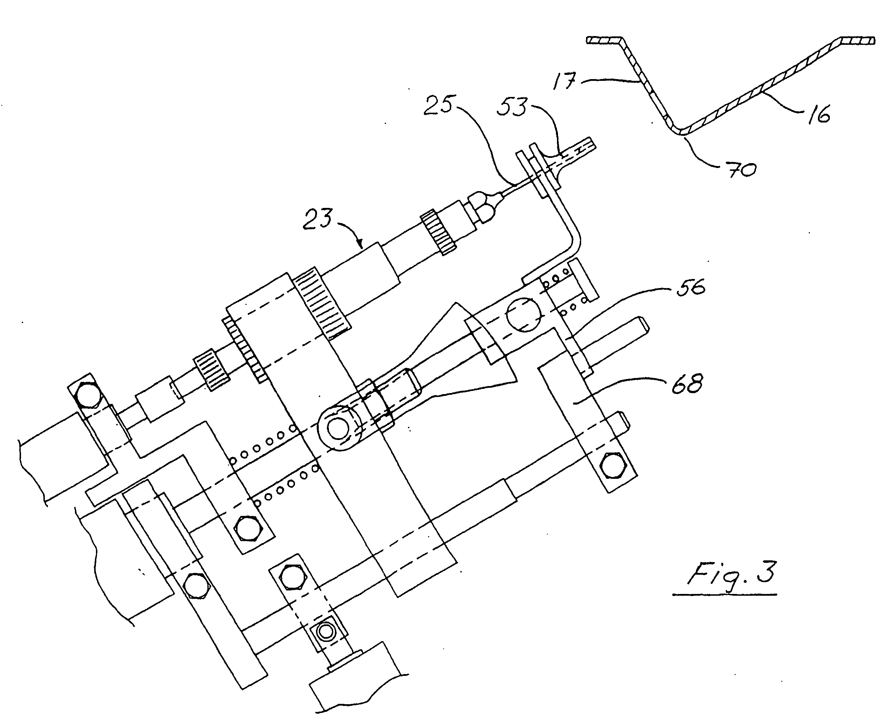

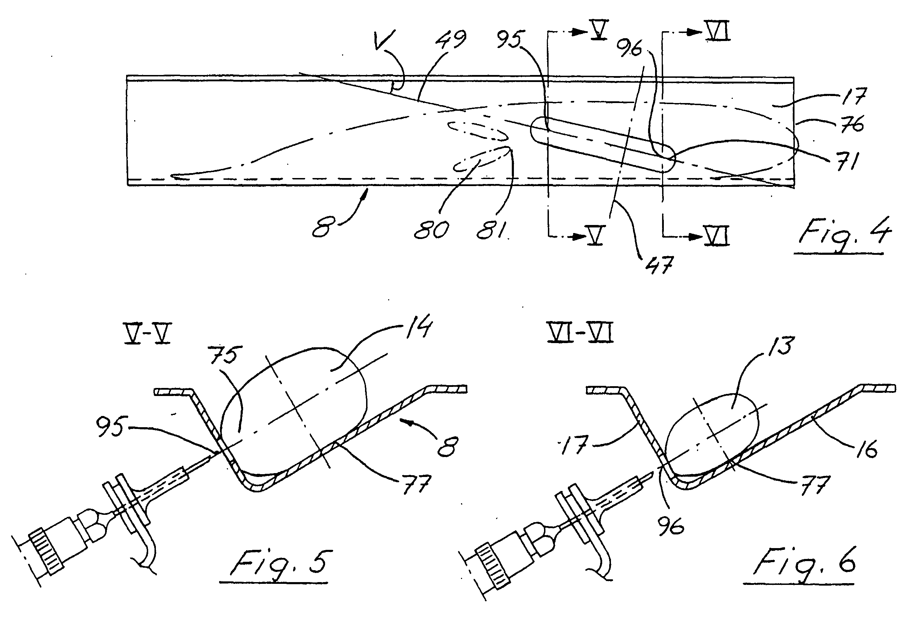

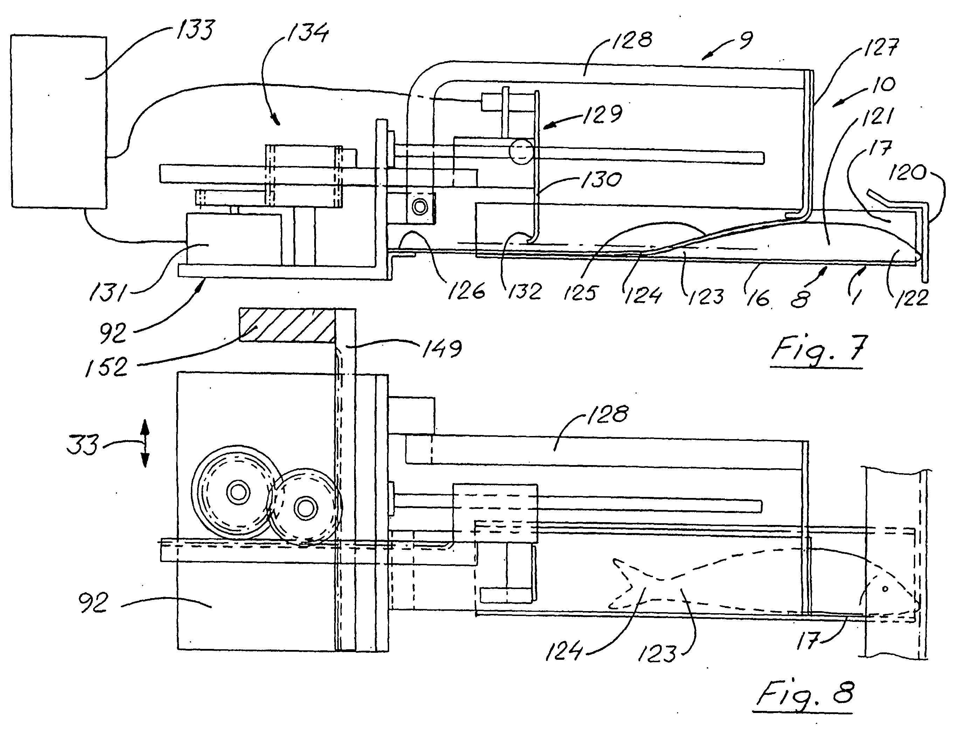

The invention will in the following be described more in detail with a preferred embodiment, with reference to the enclosed drawings, at which fig. 1 shows a partly broken side-view of the essential parts of the device according to the invention, fig. 2 is a side view of an example of an injection unit that is included in the device, fig. 3 is a corresponding view of the injection unit, where a fish compartment that is included in the device also is shown, fig. 4 is a view obliquely from below of the fish compartment, fig. 5 and 6 show different sections along the lines V-V and VI-VI in fig. 4, respectively, while fig. 7 and 8 show an example of a measuring unit that is included in the device.

### MODE FOR CARRYING OUT THE INVENTION

The main parts of the device according to the device are then shown together in fig. 1, where the device or establishment for fish injection, for example fish vaccination, is equipped with a transporter 1 for transport of living, but anaesthetized, fish in a chosen transport direction that is symbolized with an arrow 2. The transporter is for example a chain transporter of the type endless transporter with for example a pair of endless loops of transporter chains 3 which are linked with two chain wheels 4, 5 in each end of the transporter. The chain wheels are rotatably journalled in bearings on rotatinal axes 6, 7, of which one is coupled to a propulsion device, which is not shown and usually consists of a rotating electrical motor with a suitable changing for a suitably continuous movement. The transporter, more precisely its chains 3 support object carriers in the form of fish compartments 8, which are separate units made of a suitably rigid material, for example stainless steel with such an attachment that they are allowed to follow in the chain's linking around the wheels 4, 5. Each compartment 8 has a longitudinal direction that is directed transversely to the transport direction 2 and is arranged to carry one fish in the longitudinal direction of the compartment with one fish in each compartment. It is, however, not necessary that there is one fish in each compartment.

A measuring station 9 is a part of the injection device according to the invention, which measuring station 9 in the example shown consists of two measuring units 10, 11, which are described with an example below with reference to fig. 7 and 8. The measuring units 10, 11 are arranged to measure the individual length of each fish 12-14, which are shown symbolically with the contour of a cross-section. The measuring units are inclined and angled in the same way as each individual fish compartment 8, and are directed towards one of the supporting parts 16 of the fish compartments, and arranged with a mutual interspace that corresponds to the division of the fish compartments or mutual distance regarded perpendicular to the second supporting part 17 of the fish compartments, which is arranged essentially perpendicular to the first supporting part 16. The divisional distance of the fish compartments in the current direction is indicated with a scale arrow 18, while the mutual distance between the measuring units in the same direction is indicated with a scale arrow 19 in fig. 1. This distance 18, 19 is intended to correspond to the divisional distance between fish in neighbouring compartments, regarded in a manner parallel to the plane of the supporting part 16. Each fish 12-14 is measured from a determined reference point, against which the nose of the fish lies.

In the injection device according to the invention an injection station 20 is further included, which in the example shown consists of two injection units 21, 22. In these, two hypodermic syringes 23, 24 are included, each with an hypodermic needle or cannula 25, 26, which according to the invention is individually adjustable depending on the measured length of the fish in order to provide a direction and penetration depth that is adapted to the length and width of the fish, which will be described more in detail below. The injection station 20 also includes a pressing device 27, 28 intended for each injection unit, which pressing device 27, 28 in the example shown is made as a pressure plate 29, that is attached to an arm 31 that is pivoting around an axis 30. This arm 31 is arranged to rotate towards one of the sides of the fish in connection with the injection in order to ensure that the fish is retained in a correct position during the injection.

In order to enable the different operations at both stations, i.e. partly length measurement at the measurement station 10 and partly injection at the injection station 20, to take place during continuous feeding of the fish in their compartments 8, both the measuring station and the injection station 20 are arranged on an accompanying carriage 32 which is arranged to perform a reciprocating motion between two limiting positions with a length of stroke or length of movement that is equal to the divisional distances for the compartments 8, i.e. the horizontally projected distance between the corresponding points on neighbouring fish compartments. The reciprocating motion is symbolized with a double arrow 33. The forward strike movement corresponding to the direction according to the arrow 2 shall be synchronous with the transporter's movement, i.e. the feeding velocity of the fish compartments 8. For this purpose, a propulsion device 34 is arranged, which may be coupled to the propulsion device of the transporter and consists of a movement mechanism which from a rotating movement around the propulsion axis 35 achieves the reciprocating motion. This may for example be achieved by means of an arcuate cam disc 36 that is eccentrically attached to the propulsion axis 35 and affects a rigid double-armed bell crank 37, pivoted journalled in bearings around an axis 38 that is connected with a fixed machine support, which among other things support the transporter's axes 6, 7 and the propulsion axis 35. The double-armed bell crank 37 is thus equipped with two arms 39, 40 of which one is equipped with a swivelling castor 41 that functions as a sensor against the periphery 42 of the arcuate cam disc 36. As the second link arm 40 is pivoted journalled in bearings in the carriage 32 around an axis 43, the rotational movement is converted to a linear reciprocating motion of the carriage 32. This is moveable in a not shown linear guide device that controls the movements of the carriage.

The accompanying carriage 32 carries a support 92 in the example shown, which in turn carries the measuring station 9 and the pressing devices 27, 28. Via swinging arms 93, the support 92 is vertically adjustable enabling the measuring station to be in a lower, active position during the forward movement of the carriage and removed during the return movement.

With reference to mainly fig. 2-6 the injection station 20 will be described more in detail., more precisely one of the two injection units 21, 22, which are identical and arranged in a row, i.e. one after the other in the feeding direction, will be described. The units 21, 22 are placed with a mutual distance, see the scale line 78 in fig. 1, which corresponds to the division of the fish compartments regarded perpendicular to the wall part 16 of the fish compartments, i.e. mainly equal to the width of the wall part 17. This measure is also intended to mainly correspond to the perpendicular distance between fish in neighbouring compartments measured in a manner parallel with the plane of the supporting part 17. Besides an hypodermic syringe 23, each injection unit consists of an adjustment device 44 for adjustment of the hypodermic syringe 23 concerning insertion position and insertion depth depending on the length of each individual fish, which is measured by means of the respective length measuring unit 10, 11. Further, a propulsion unit 45 for the insertion movement of the hypodermic syringe 23 is included, i.e. longitudinal movement of the hypodermic syringe including its cannula 25 for insertion into the abdomen of the fish. A propulsion device 79 is arranged to propel the hypodermic syringe 23 for its injection movement, e.g. administer the compound via the cannula in the abdomen of the fish. The injection unit 21, 22 is arranged to administer doses of the compound in a previously known manner, for example vaccine in a liquid form for each fish. The compound is administered in a previously known manner through the cannula needle which is tubular an thus contains an open liquid conduit in the needle-point 46.

Each injection unit 21, 22 is applied in a container or console 48, which is arranged in such a way that the hypodermic syringe 23 is movable (see the double arrow 15) around a pivot axis 47 by means of the adjustment device 44, which pivot axis 47 is directed in such a way that each hypodermic syringe may be adjusted a predetermined length of the length of each fish compartment 8, see fig. 4. The console 48 and the pivot axis 47 are, however, arranged such that the rotating motion takes place along a rotational plane which has an angle v towards the longitudinal direction of the fish compartment 8, which for example may be represented by the wall part 16. This angle v is carefully selected after study and calculations of the thickness of the current type of fish in relation to its length. According to the invention, the adjustment device then sets the position for the hypodermic syringe, namely its alignment, i.e. its rotational position around its pivot axis 47 such that the hypodermic needle strikes the abdomen of the fish at the intended position, both along the length of the fish and also centred transversally along the symmetrical longitudinal axis of the fish, which position then varies depending on the size of the current fish, more precisely its thickness which then depends on its length according to a certain relation for a certain type of fish.

As an example, the optimal position of the insertion point 95, 96 for salmon along the symmetric line or middle line of the abdomen is 1-1½ ventral fin length in front of the insertion 81 of the ventral fin 80, see fig. 4. For a certain type of fish, this insertion 81 thus has a position along the middle line of the abdomen, that may be expressed as a factor or a part of the length of the fish, for example 0,5 counted from the nose or the tail of the fish. This factor, adjusted according to the above for the insertion point is thus used for controlling the adjustment device 44. The movement of the adjustment device 44 in the inclined movement plane or the rotational plane 49, see fig. 4, and also the position retaining in the chosen angular position, are achieved by means of a setting component 50, which is attached between the console 48 and a moveable container 51 that follows the adjustment movement. The setting component 50 is of the type reciprocating linear propulsion device and may be a number of, e.g. three, double-acting pneumatic piston type cylinders connected in series, a linear motor, such as a ball/nut/screw/motor. The propulsion device 45 for the insertion movement may be a single-acting pneumatic piston type cylinder, which for example works against the action of a pressure spring which takes care of the return movement, alternatively the piston type cylinder is double-acting, enabling it to actively achieve both the forward movement against the fish and the withdrawing return movement to a passive position that is shown in fig. 3.

The adjustment device 44 includes a mechanism for partly automatic and partly manual adjustment of the insertion depth of the cannula 25 or the needle. For this purpose, a stopping organ 53 in the form of a casing which has a through channel through which the cannula extends and is equipped with a front stopping edge 54 intended to contact the outside of the abdomen of the fish is arranged. As the stopping organ 53 is adjustable to different relative positions along the cannula, the insertion depth may be adjusted as the abdomen surface in a more protruding position of the stopping edge 54 is pressed inwards a slight distance. This adjustment function is in the example shown automatic, and adjusted for the set angular position. This is achieved as the stopping organ is carried by a supporting arm 55, which in turn is placed on a slide 56, which is moveable along a guide rod 58 under the action of a pressure spring 57. This setting is achieved by means of a arcuate cam profile 59, which acts against a protrusion 60, which may be a roller mounted on the slide 56. The arcuate cam profile is in turn applied to a cam arm 61, which is pivoted journalled in bearings on a holding arm 63 around an axle bar 62. Said holding arm 63 supports the hypodermic syringe 23 in such a way that the arm 63 follows the insertion movements. At a distance from the formed joint point 62, a manoeuvring arm 65 is pivoted journalled in bearings around a pivot point 64, which manoeuvring arm 65 at its opposite end is pivoted journalled in bearings in the fixed console 48 around an axle bar 66. A further guide rod forms guidance for the holding arm 63 and supports an arm 68, which in turn supports a guide rod 69, which forms guidance for the slide 56.

By means of the insertion depth adjustment mechanism described above, the stopping organ 53 will change its relative position along the cannula due to the cam arm's 61 pivoting around its joint point 62 when the stopping organ 50 sets the hypodermic syringe 23 depending on measured fish length. Thus compensation is carried out for the increased distance to the insertion point on the fish abdomen and for the need for a deeper insertion depending on the size of the fish. A longer and thicker fish namely has a thicker abdomen wall, which requires a deeper insertion in order to keep the required insertion depth within a accurately predetermined interval, for example 1-2 mm from the inside of the abdomen wall.

The basic adjustment of the insertion depth is adjusted manually by means of adjustment organs, which in the example shown are formed by an adjustment nut 82, which is rotatable around a threaded part 83 of a propulsion rod 84, which in its upper end transcends into the guide rod 58. A pressure spring 85 presses the holding arm 63 against the adjustment nut and is pretensioned against a seating on the propulsion rod 84. The holding arm 63 is then axially adjustable along the propulsion rod 84, which extends through a guide on the arm 63, e.g. a through hole. As the cam arm 61 has its pivot axis 62 applied on the holding arm 63, the stopping casing 53 also follows the manual linear adjustment movement together with the hypodermic syringe 23, more precisely the syringe housing 87, which is supported by the holding arm 63. The lower end 88 of the propulsion rod 84 emanates from the propulsion device 45 and is propelled in a previously known manner to perform a an axial reciprocating insertion motion from a rear position with the needle 25 withdrawn and a front position, which corresponds to the insertion position. As apparent from fig. 2 and 3, a support arm 89 is mounted on the lower end 88 of the propulsion rod 84 in a fixed manner, and thus follows the insertion movement. The support arm 89, which in the example also constitutes the seat 86 for the pressure spring 85, supports the propulsion device 79 for the injection movement, more precisely its housing 90. This is included in a linear propulsion engine, e.g. a double-acting pneumatic piston type cylinder with a propulsion rod 91 that propels an injection mechanism, e.g. a piston in the hypodermic syringe 23.

Fig. 3 shows the injection unit 21 in the withdrawn passive position of the hypodermic syringe 23. It is apparent from the figure that the stopping device 53 does not follow the whole withdrawing movement, but the slide 56 gets into contact with the stopping arm 68, which results in that the cannula 25 is completely retracted, also with its point 46 in the stopping device 53. Thus the cannula and its needle-point is rinsed from remaining fish-scale, which otherwise may disturb the injection and depress the abdomen wall of the fish and then result in an erroneous penetration depth. It is further apparent that the whole injection unit is withdrawn, enabling the lower part, e.g. the corner part 70, of the fish compartment 8 to pass freely during the return movement of the carriage 32, while the transporter moves forward.

Fig. 4 shows one separate fish compartment regarded obliquely from below, more precisely perpendicular to one of the wall parts 17 of the compartment, which in the example shown is somewhat shorter than the other wall part 16. It is then apparent that one of the wall parts of the fish compartment is equipped with an inclined elongated opening 71, which is intended to lie symmetrically with the rotational plane 49 of the injection unit during the injection movement. Thus the opening 71 has an inclination with the angle v against the wall part 16 regarded in the plane of the wall part 17. The length of the opening 71 is adapted to admit the required rotational interval of the injection unit around its pivot axis 47. This interval is chosen in such a way that the injection unit may be adjusted for a correct insertion point on the abdomen of the fish to be acquired independently of the size of the fish. The fish compartments may be exchangeable and provided with different dimensions of both the wall parts 16, 17 and the opening 71 and its angle v and length according to the current type of fish that shall be injected. In a corresponding way, in accordance with the current type of fish, the correct angular position of the pivot axis 47 and thus the current angular position of the current rotational plane 49 with respect to the longitudinal direction of the fish compartment is chosen. The opening 71 may be replaced with a row of several holes. It is also conceivable that the whole fish compartment 8 is penetrated, for example perforated or made as a grid or net. The essential thing is that the fish compartment is arranged to be open for the insertion of the syringe needle-point and injection in the set position.

With reference to fig. 7 and 8, an example of a measuring unit 10 that is included in the measuring station 9 will be described. The measuring unit 10 is of a kind that is based on electromechanical contact measurement, but is extraordinarily lenient. The measuring unit 10 is, as described above, arranged above the transporter 1 that in fig. 7 and 8 is represented with one of the fish compartments 8, which suitably is inclined in its longitudinal direction downwards, towards one of its ends, where a fixed stopping plate 120 runs below the whole feeding length of the transporter, over which feeding length the fish will be fed. The stopping plate 120 forms a reference plane or reference line for one end of each fish 121, in the example shown the head end 122, more precisely the nose tip is in contact with the stopping plate 120. Due to the inclination, all the fish will then end up with one their ends along the same line, while the measuring device measures from the opposite end, i.e. the tail end 123, more precisely except the tail fin which may be more or less removed. The fish 121 thus rests with one of its sides against one of the wall parts 16 of the fish compartment 8, while the fish rests with its abdomen against the other wall part 17 of the compartment. In this way the length of the fish body is then measured.

In the measuring unit 10, a protective cloth 125 is included, which has one end 126 attached to the measuring unit outside the fish compartments and the other end 127 supported by a supporting arm 128. In the unit there is further included a movable sensor carriage 129 above the current fish compartment, which sensor carriage 129 is of an electromechanical type with a sensing arm 130. The propulsion of the sensor carriage 129 takes place by means of a propulsion mechanism in the form of a gear wheel and gear rack mechanism 134 which movements suitably are used for the pulse counting by means of e.g. a pulse sensor 131. The propelling force for the movement of the sensor carriage 129 is acquired as a gear rack 149 in the propulsion mechanism 134 is applied to the stationary support 152 of the establishment in a fixed way, where the movement is generated by the movement of the accompanying carriage 32. By means of the propulsion mechanism 134, the sensor carriage 129 is moveable along the current fish compartment with the sensing edge 132 of the sensing arm 130 immediately above the protective cloth 125 which is in contact with the wall 17 of the fish compartment 8 before the body of the fish which wall 17 forms a vertical reference plane. The sensing edge 132 of the sensing arm 130 is suitably vertically adjustable for calibration of a certain sensing height, suitably higher than the thickness of the tail fin 124. The sensing edge 132 is then arranged to sense the end 123 of the body of the fish, and then activate the sensor carriage 129 to emit a sensor signal to the control unit 133, which is constituted by a computer. It is partly arranged to acquire a signal from the pulse sensor 131 concerning covered distance, for example by pulse counting, and partly arranged to register at which covered distance the sensing arm 132 senses the end 123 of the fish. The covered distance is calculated from a reference point that has a known distance to the opposite reference point, i.e. the stopping plate 120.

With reference to fig. 1-6 the procedure for injection of compounds into fish according to the invention will be described. The fish, which is of a certain fish type, for example salmon, cod or some other kind, is fed on the transporter 1 from a feeding table, where the fish then may be unsorted regarding the size of the fish. The feeding may take automatically or manually such that the fish is placed with its abdomen 75 facing downwards and with its longitudinal direction along the longitudinal direction of the compartment, i.e. transversely to the feeding direction 2 of the transporter. The nose shall be facing a determined direction and in contact with a fixed edge, along which the fish compartments move. The edge may connect relatively closely to one of the end edges 76 of the fish compartment, where the fish compartment thus may be open. The transporter is then arranged in such a way that the fish compartments are slightly inclined downwards in the longitudinal direction with the edge 76 as the lowest part of the compartment. Alternatively, each compartment may be equipped with an upright wall at the edge 76. The essential thing is that each fish has a determined position and reference point in each compartment, suitably starting from the nose end. Further, each fish is lying in each separate compartment with one of its sides 77 lying against a reference plane which is constituted by the widest wall part 16 of the compartment, while each fish rests with its abdomen 75 against the shorter wall part 17. The two wall parts are also inclined relative to a vertical plane such that the fish finds its reference positions by means of its own weight. Examples of inclination angles is an inclination of about 30-45 degrees of the wall 16 that supports the side of the fish, while an inclination of 45-70 degrees with respect to a horizontal plane is suitable for the other wall part 17.

The feeding table is placed in the feeding direction 2 regarded before the measuring station 9, where the compartments principally are equipped with one fish each which passes the measuring station. As the measuring station is arranged with two measuring units 10, 11 working in a parallel manner and these are arranged on the reciprocating carriage 32, measurement takes place during the forward movement of the measuring units which are situated in their active measuring position by means of the mobility of the support 92 via the link arms 93, see the double arrow 150, where electronic measurement information regarding the length of each fish is stored in the control unit. This measurement information is forwarded to the respective injection unit 21, 22 in the injection station 20, which in the example shown is placed on the carriage 32 in such a way that injection takes place at the two fish compartments that are placed immediately after the two fish compartments that pass the measuring units 10, 11. Alternatively, the measuring station 20 may be arranged on a completely separate carriage that works synchronously with the carriage for the measuring station, or the control unit can keep track of which compartments that carries a certain fish with a certain measured length. With the measurement information as control signal, the adjustment device 44 is the adjusted, more precisely the setting component 50 in the respective injection unit 21, 22, which individually are set to such an rotational angle around the axis 47 that the correct insertion point on the abdomen of the fish may be struck by the cannula. The insertion point is calculated to be positioned at a place situated at a distance from the head or nose of the fish, which distance constitutes the established predetermined part of the measured length of the fish, which provides a large probability for the correct place for injection. By the rotation around the inclined plane, a lateral correction is also acquired, such that the centre of the abdomen is struck by the cannula, i.e. that a lateral correction takes place, which is based on known normal fish proportion for a certain fish type.

Further, depending on the chosen length, an automatic correction of the insertion depth takes place as mentioned above. Before and during the time of the insertion and the injection, the depressing devices 27, 28 are activated as the arm 29 rotates downwards in order to keep the fish in position by means of a light pressure during the insertion and the injection moment. Insertion and injection is then performed for two fish at the same time and individually as the two injection units 21, 22 first are activated separately for insertion by means of the propulsion unit 45, where the hypodermic syringe and its cannula 25 is brought forwards with a quick movement and insertion takes place through the elongated opening 71 at the fish compartment. Absence of fish in individual compartments or a row of compartments is detected by the measuring station, which results in the absence of measuring signal and the absence of activation of the current injection unit.

During a first part of the forwards protruding movement, the stopping casing 53 does not move, bot more precisely first when the arcuate cam profile 59 gets into contact with the stopping rod 60. This results in that the cannula point 46 first protrudes from its protected position according to fig. 3 to the chosen insertion point according to fig. 2. Then the stopping casing 53 follows the insertion movement and reaches the abdomen surface of the fish such that the cannula point 46 is inserted into the abdomen to the chosen insertion depth, usually 1-2 mm beneath the abdomen wall. Then the injection movement is activated, i.e. the injection moment is initiated, with the housing 87 of the syringe 23 motionless and the propulsion device 79 activated by the control unit in order to administer the liquid substance with a chosen dosage through the cannula under a light pressure.

Thereafter, the hypodermic syringe 23 and the cannula 25 are retracted by means of the propulsion device 45, and the carriage returns a distance that corresponds to a fish compartment division. Since the transporter moves forward with the same velocity at the same time, the relative displacement has resulted in two fish compartment divisions. During the return movement, the support 92 with the measuring station 9 and the depressing devices 27, 28 are also raised, see the double arrow 150.

The invention is not limited to the embodiment examples described above and showed in the drawings, bur may be varied within the scope of the appended claims. For example, the measuring station may be equipped with only one measuring unit and the injection station equipped with only one injection unit. The measuring of length may be performed in many ways, instead of an electromechanical solution a completely contactless electrooptical solution may be used. Further, the mechanism for adjusting the injection units in detail may be designed in a different way. For clarifying reasons it is here stated that the handling concerns living fish, that, however, have been made passive of handling reasons, in order to keep the fish motionless in their compartments, suitably by means of anaesthesia.

## Claims

1. Method for automatic injection of compounds into living fish **characterized in that** fish is fed on a transporter (1) placed in compartments (8) with each fish oriented transversely to the feeding direction, that each fish is measured with respect to size, that an injection unit (20) is adjusted for each measured fish for positioning against an injection point (95, 96) at the fish depending on the size of the measured fish and that injection takes place by means of an insertion movement to a chosen insertion depth by means of a cannula (25) at the chosen insertion point on each fed fish and administering of compounds via the cannula.

2. Method according to claim 1, **characterized in that** the injection station (20) and the measuring station (9) follow the feeding movement of the transporter during the measurement and the injection.

3. Device for automatic injection of compounds into living fish, **characterized in that** a transporter (1) with several compartments (8) which are transverse to a feeding direction (2) for the transporter, a measuring station (9) for measuring the fish (12-14) with respect to size, an injection station (20) with at least one injection unit (21, 22) for insertion of a cannula (25) and injection of compounds into each fish, via the cannula and an adjustment device (44), included in the injection unit, which adjustment device (44) is adapted for adjustment of the unit to a chosen position for insertion and injection on a chosen point (95, 96) in each fish depending on the size of the measured fish.

4. Device according to claim 3, **characterized in that** each measuring station (9) consists of two measuring units (10, 11) for measuring the length of two fish at the same measuring moment.

5. Device according to claim 4, **characterized in that** each injection station (20) consists of two injection units (21, 22).

6. Device according to claim 1 or 5, **characterized in that** each injection unit (21, 22) is adjustable to a certain direction of the cannula (25) around a determined pivot axis (47) depending on the measured length of the fish.

7. Device according to claim 6, **characterized in that** the pivot axis (47) is inclined in such a way that each injection unit (21, 22) is adjustable by rotation in a plane that extends in a chosen angle (v) relative to the longitudinal direction of the fish compartments (8), such that a certain direction corresponds to a certain distance of the insertion point (95, 96) from a reference surface (16) on the fish compartments.

8. Device according to claim 7, **characterized in that** the reference surface (16) consists of a first wall part (16) of each fish compartment (9) and that at least one opening (71) is aranged in a second wall part (17) and extends in a direction that corresponds to the angle (v) of the rotational plane of the injection unit (21, 22).

## Patentansprüche

1. Verfahren für die automatische Injektion von Substanzen in lebenden Fisch, **dadurch gekennzeichnet, dass** Fisch in Fächern (8) angeordnet auf eine Fördereinrichtung (1) zugeführt wird, wobei jeder Fisch quer zur Zuführrichtung angeordnet ist, dass jeder Fisch bezüglich der Größe gemessen wird, dass eine Injektionsstation (20) für jeden gemessenen Fisch abhängig von der Größe des gemessenen Fisches auf einen Injektionspunkt (95, 96) am Fisch eingestellt wird, und dass die Injektion durch eine Einschiebbewegung bis zu einer gewählten Einführungstiefe mittels einer Kanüle (25.) am gewählten Einführungspunkt bei jedem zugeführten Fisch durchgeführt wird und Substanzen über die Kanüle verabreicht werden.

2. Verfahren nach Anspruch 1, **dadurch gekennzeichnet, dass** die Injektionsstation (20) und die Messstation (9) während des Messens und der Injektion der Zuführbewegung der Fördereinrichtung folgen.

3. Vorrichtung zum automatischen Injizieren von Substanzen in lebenden Fisch, **dadurch gekennzeichnet, dass** sie eine Fördereinrichtung (1) mit mehreren Fächern (8), die quer zur Förderrichtung (2) der Fördereinrichtung angeordnet sind, eine Messstation (9) zum Messen der Größe des Fisches (12-14), eine Injektionsstation (20) mit mindestens einer Injektionseinheit (21, 22) zum Einschieben einer Kanüle (25) und Injizieren von Substanzen in jeden Fisch über die Kanüle und eine in der Injektionseinheit enthaltene Einstelleinrichtung (44) aufweist, wobei durch die Einstelleinrichtung (44) die Einheit abhängig von der Größe des gemessenen Fisches bei jedem Fisch auf eine gewählte Stellung zum Einschieben und Injizieren an einem ausgewählten Punkt (95, 96) einstellbar ist.

4. Vorrichtung nach Anspruch 3, **dadurch gekennzeichnet, dass** jede Messstation (9) zwei Messeinheiten (10, 11) aufweist, wodurch die Länge von zwei Fischen gleichzeitig messbar ist.

5. Vorrichtung nach Anspruch 4, **dadurch gekennzeichnet, dass** jede Injektionsstation (20) zwei Injektionseinheiten (21, 22) aufweist.

6. Vorrichtung nach Anspruch 1 oder 5, **dadurch gekennzeichnet, dass** jede Injektionseinheit (21, 22) abhängig von der gemessenen Länge des Fisches auf eine bestimmte Richtung der Kanüle (25) um eine bestimmte Drehachse (47) einstellbar ist.

7. Vorrichtung nach Anspruch 6, **dadurch gekennzeichnet, dass** die Drehachse (47) in einer solchen Weise geneigt ist, dass jede Injektionseinheit (21, 22) durch Drehung in einer Ebene einstellbar ist, die sich so unter einem gewählten Winkel (v) relativ zur Längsrichtung der Fischfächer (8) erstreckt, dass eine bestimmte Richtung einem bestimmten Abstand des Einführungspunktes (95, 96) von einer Bezugsfläche (16) an den Fischfächern entspricht.

8. Vorrichtung nach Anspruch 7, **dadurch gekennzeichnet, dass** die Bezugsfläche (16) aus einem ersten Wandteil (16) jedes Fischfaches (8) besteht, und dass mindestens eine Öffnung (71) in einem zweiten Wandteil (17) angeordnet ist und sich in einer Richtung erstreckt, die dem Winkel (v) der Drehebene der Injektionseinheit (21,22) entspricht.

## Revendications

1. Procédé d'injection automatique de composés à l'intérieur de poissons vivants ***caractérisé* en ce que** les poissons sont alimentés sur un transporteur (1), placés dans des compartiments (8) avec chaque poisson orienté transversalement à la direction de l'alimentation, **en ce que** la taille de chaque poisson est mesurée, **en ce qu'**une unité d'injection (20) est réglée pour chaque poisson mesuré pour un positionnement vis-à-vis d'un point d'injection (95, 96) sur le poisson dépendant de la taille du poisson mesuré et **en ce que** l'injection est réalisée par un mouvement d'insertion à une profondeur choisie d'insertion au moyen d'une canule (25) au point choisi d'insertion sur chaque poisson alimenté, les composés étant administrés via la canule.

2. Procédé selon la revendication 1, ***caractérisé* en ce que** le poste d'injection (20) et le poste de mesure (9) suivent le mouvement de l'alimentation du transporteur pendant la mesure et l'injection.

3. Dispositif pour l'injection automatique de composés à l'intérieur de poissons vivants ***caractérisé* en ce qu'**un transporteur (1) avec plusieurs compartiments (8) qui sont transversaux à une direction d'alimentation (2) pour le transporteur, un poste de mesure (9) pour mesurer la taille des poissons (12-14), un poste d'injection (20) avec au moins une unité d'injection (21, 22) pour l'insertion d'une canule (25) et l'injection de composés à l'intérieur de chaque poisson, via la canule et un dispositif d'ajustement (44), inclus dans l'unité d'injection, lequel dispositif d'ajustement est adapté pour le réglage de l'unité à une position choisie pour l'insertion et l'injection sur un point choisi (95, 96) dans chaque poisson dépendant de la taille du poisson mesuré.

4. Dispositif selon la revendication 3, ***caractérisé* en ce que** chaque poste de mesure (9) est constitué de deux unités de mesure (10, 11) pour mesurer la longueur de deux poissons au même moment de mesure.

5. Dispositif selon la revendication 4, ***caractérisé* en ce que** chaque poste d'injection (20) est constitué de deux unités d'injection (21, 22).

6. Dispositif selon l'une des revendications 1 à 5, ***caractérisé* en ce que** chaque unité d'injection (21, 22) est ajustable selon une certaine direction de la canule (25) autour d'un axe de pivot déterminé (47) dépendant de la longueur mesurée du poisson.

7. Dispositif selon la revendication 6, ***caractérisé* en ce que** l'axe de pivot (47) est incliné de telle manière que chaque unité d'injection (21, 22) est ajustable par rotation dans un plan qui s'étend dans un angle choisi (v) relatif à la direction longitudinale des compartiments à poissons (8), de sorte qu'une direction donnée correspond à une distance donnée du point d'insertion (95, 96) par rapport à une surface de référence (16) sur les compartiments à poissons.

8. Dispositif selon la revendication 7, ***caractérisé* en ce que** la surface de référence (16) est constituée d'une première partie murale (16) de chaque compartiment à poissons (8) et **en ce qu'**au moins une ouverture (71) est prévue dans une seconde partie murale (17) et s'étend dans une direction qui correspond à l'angle (v) du plan de rotation de l'unité d'injection (21, 22).
